Europäisches Patentamt

European Patent Office

Office européen des brevets

(19)

(11) Veröffentlichungsnummer: **0 203 571**
**B1**

(12) **EUROPÄISCHE PATENTSCHRIFT**

(45) Veröffentlichungstag der Patentschrift: **27.06.90**

(21) Anmeldenummer: **86107183.5**

(22) Anmeldetag: **27.05.86**

(51) Int. Cl.⁵: **H 02 M 7/5387**, H 02 H 7/122

(54) Statischer Wechselrichter mit einer Schaltung zur Stromüberhöhung im Kurzschlussfall.

(30) Priorität: **29.05.85 DE 3519151**

(43) Veröffentlichungstag der Anmeldung:
**03.12.86 Patentblatt 86/49**

(45) Bekanntmachung des Hinweises auf die
Patenterteilung:
**27.06.90 Patentblatt 90/26**

(84) Benannte Vertragsstaaten:
**DE FR GB IT**

(56) Entgegenhaltungen:
**EP-A-0 010 980**

(73) Patentinhaber: **Anton Piller GmbH & Co. KG
Abgunst 24
D-3360 Osterode/Harz (DE)**

(72) Erfinder: **Sachs, Klaus, Dipl.-Ing.
Quellenweg 26
D-3360 Osterode/Harz (DE)**

(74) Vertreter: **Gralfs, Harro, Dipl.-Ing.
Am Bürgerpark 8
D-3300 Braunschweig (DE)**

EP 0 203 571 B1

**Beschreibung**

Die Erfindung bezieht sich auf einen statischen Wechselrichter nach dem Oberbegriff des Patentanspruches 1.

Bei einem bekannten Wechselrichter der gattungsgemäßen Art (DE-OS 31 27 460) ist ein Transformator vorgesehen, der bei einem kurzschlußbedingten Spannungsabfall über Schaltschütze auf den Wechselrichterausgang geschaltet wird, wobei gleichzeitig dessen direkte Verbindung zur Last unterbrochen wird. Vom Transformator wird ohne Erhöhung der Ausgangsleistung des Wechselrichters ein Kurzschlußstrom abgegeben, der ein Mehrfaches des Nennstromes ist und der ein schnelles Ansprechen der im Kurzschlußkreis liegenden Sicherung bewirkt. Mit einer solchen Schaltung sind Ansprechzeiten in der Größenordnung von 500 ms erreicht, die 50 Halbwellen eines 50 Hz Wechselstroms entsprechen und beispielsweise den Anforderungen genügen, die an den Betrieb von kritischen Beleuchtungen, beispielsweise Operationsleuchten gestellt werden.

Bei Rechneranlagen sind nur um wenigstens eine Größenordnung kürzere Unterbrechungen der Stromversorgung zulässig, die wesentlich unter den mit den bekannten Wechselrichtern erreichbaren liegen. Die erforderlichen Ansprechzeiten liegen üblicherweise bei etwa 10 ms.

Es ist weiter ein statischer Wechselrichter mit nachgeschaltetem Transformator bekannt, bei dem zur Begrenzung des Stroms, der in eine elektrostatische Kapazität fließt, über den Wechselrichterausgang eine Reihenschaltung aus einer Induktivität und zwei antiparallel geschalteten Thyristoren gelegt ist (JA-PS 56-62073 A Patent Abstracts of Japan — E-69 August 12, 1981 Vol. 5/ No. 125).

Aufgabe der Erfindung ist es, einen Wechselrichter der gattungsgemäßen Art so auszugestalten, daß mit ihm selektive Ansprechzeiten von etwa 10 ms und darunter, d.h. während einer Halbwelle erreichbar sind.

Diese Aufgabe wird gemäß der Erfindung gelöst durch die im kennzeichnenden Teil des Patentanspruches 1 herausgestellten Merkmale.

Zweckmäßige Ausgestaltungen sind Gegenstand der Unteransprüche.

Mit dem Wechselrichter gemäß der Erfindung wird der Ausgangsstrom des Wechselrichters im Kurzschlußfall wesentlich über dessen Nennstrom angehoben. Es sind dabei mit für die Nennleistung dimensionierten Bauelementen Kurzschlußströme bis zum vielfachen Nennstrom erreichbar. Damit ist ein extrem schnelles selektives Ansprechen von Sicherungen sichergestellt.

Die Erfindung ist in der Zeichnung in einem Ausführungsbeispiel dargestellt und im nachstehenden im einzelnen beschrieben.

Es zeigen:

Fig. 1 eine Schaltung eines statischen Wechselrichters mit Lastkreis.

Fig. 2 eine Ausführungsform der Steuerschaltung.

Fig. 3 und 4 zeigen anhand von Diagrammen die Wirkung der Schaltung.

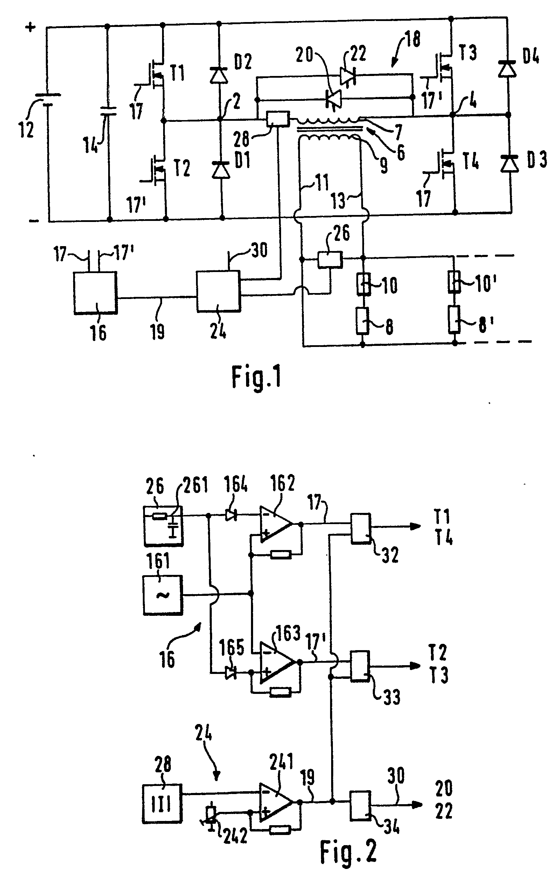

Fig. 1 zeigt eine Schaltung mit MOS-Fet's als Halbleiterschaltelemente. Es sind hier jeweils zwei Halbleiterschaltelemente T1 und T2 bzw. T3 und T4 in Reihe geschaltet. Antiparallel dazu sind jeweils Freilaufdioden DI bis D4 geschaltet. Die Kombinationen T1, D2 und T2, D1 haben einen gemeinsamen Lastpunkt 2 und die Kombinationen T3, D4 und T4, D3 einen gemeinsamen Lastpunkt 4, die den Wechselrichterausgang bilden. Zwischen diesen Lastpunkten ist ein durch externe ohmsch-induktive Verbraucher 8 belasteter Transformator 6 geschaltet. Dieser Transformator 6 bildet mit den externen Verbrauchern 8, 8' die Last des Wechselrichters. An den Wechselrichterausgang ist die Primärwicklung 7 des Transformators und an dessen Sekundärwicklung 9 sind die externen Verbraucher 8, 8' angeschlossen, die jeweils über eine Sicherung 10, 10' abgesichert sind. Die ohmsch-induktiven Verbraucher 8, 8' können aber auch direkt an den Wechselrichterausgang angeschlossen werden, wenn ein Transformator nicht erforderlich ist.

Die anderen Anschlüsse der Halbleiterschaltelemente T1 und T3 bzw. der Freilaufdioden D2 und D4 sind jeweils an den Pluspol einer Gleichspannungsquelle 12 angeschlossen, während die anderen Anschlüsse der Halbleiterschaltelemente T2 bis T4 und der Freilaufdioden DI und D3 an den Minuspol der Gleichspannungsquelle 12 angeschlossen sind. Über der Gleichspannungsquelle 12 ist in üblicher Weise ein Glättungskondensator 14 niederohmig angeschlossen.

Für die Halbleiterschaltelemente TI und T4 ist eine Steuerschaltung 16 mit Steuerausgängen 17 vorgesehen, die hier schematisch dargestellt ist. Derartige Steuerschaltungen für sinusförmige Modulation der gepulsten Eingangsspannung und deren Schaltverbindungen zu den Halbleiterschaltelementen sind bekannt.

Zwischen die Lastpunkte 2, 4 ist ein gesteuerter Freilaufkreis 18 mit zwei antiparallelen Thyristoren 20, 22 geschaltet. Für die Thyristoren 20 und 22 ist eine weitere Steuerschaltung 24 vorgesehen, die in Abhängigkeit von der Spannung über der Last auf der Sekundärseite des Transformators wirksam ist, und zwar alternativ mit der Steuerschaltung 16.

Die Spannung zwischen den sekundärseitigen Anschlußleitungen, hier über der Sekundärseite des Transformators wird mit einem Spannungsmesser 26 gemessen. Der Laststrom wird durch einen Strommesser 28 im Wechselrichterausgang ermittelt, der hier in Reihe mit der Primärwicklung 7 des Transformators 6 geschaltet ist. Die Steuerung der Thyristoren 20 und 22 durch die Steuerschaltung 24 ist in Fig. 1 durch die Steuerleitung 30 angedeutet. Die Steuerschaltung 24 steuert über die Steuerleitung 19, wie erwähnt, alternativ zu der Steuerschaltung 16 die Halbleiterschaltelemente T1-T4, und zwar in Abhängigkeit vom Stromfluß im Wechselrichterausgang, wie näher in der Schaltung in Fig. 2 dargestellt. Die Halbleiterschaltelemente werden durch diese Steuerschaltung gesperrt, wenn die Stromgrenze für die Halbleiterschaltelemente erreicht ist und wieder eingeschaltet, wenn der Strom auf einen vorgegebenen Minimalwert abgefallen ist, der ebenso wie der durch die Stromgrenze gegebene Maximalstrom wesentlich über dem Nennstrom liegt.

Die Stromgrenze ist die Stromstärke, bis zu der insbesondere die Bond-Drähte kurzzeitig belastbar sind und liegt bei einem Vielfachen des Nennstromes. Es kann auch die Schaltung in Abhängigkeit vom $I^2t$-Wert festgelegt werden. Der $I^2t$-Wert entspricht der dynamisch aufgenommenen Wärmemenge der Chips der Halbleiterschaltelemente. Der Grenzwert hängt von der für den Halbleiter jeweils typischen Wärmekapazität des Chipvolumens und deren maximal zulässiger Temperatur ab.

Einzelheiten der beiden Steuerschaltungen 16 und 24 und deren Zusammenwirken sind aus der Schaltung nach Fig. 2 ersichtlich.

Die für den Normalbetrieb vorhandene Steuerschaltung 16 weist einen Generator 161 auf, der eine sinusförmige Wechselspannung erzeugt. Diese wird in den Komparatoren 162 und 163, die eine leichte Hysterese besitzen, mit der im Spannungsmesser 26 mit Siebgliedern 261 gebildeten, gesiebten Ausgangsspannung verglichen. Der Komparator 162 liefert so über die Steuerleitung 17 die Steuersignale für die Schalter $T_1$ und $T_4$, welche die positive Halbwelle der Ausgangsspannung beeinflussen. In gleicher Weise werden im Komparator 163 die Steuersignale zur Ansteuerung der Schalter $T_2$ und $T_3$ für die negative Halbwelle erzeugt, die den Schaltern $T_2$ und $T_3$ über die Steuerleitungen 17' zugeführt werden. Für ein sicheres Sperren der jeweils nicht benötigten Schalter sind Dioden 164 und 165 vorgesehen. Die Schaltfrequenz stellt sich bei dieser Ansteuerung je nach Lastzustand frei ein und läßt sich durch die Zeitkonstante des Filters 261 im Spannungsmesser 26 sowie durch die Hysterese der Komparatoren 162 und 163 beeinflussen. Die Steuersignale der Leitungen 17 und 17' sind jeweils auf einen ersten Eingang eines UND-Gliedes 32 bzw. 33 geschaltet, die in den Steuerleitungen 17 bzw. 17' liegen.

Bei Kurzschluß zwischen den Anschlußleitungen 11, 13 am Ausgang des Wechselrichters bricht die Ausgangsspannung des Wechselrichters zusammen und somit das vom Spannungsmesser 26 abgegebene Signal am Eingang der Komparatoren 162 und 163. Die für die anstehende Halbwelle vorgesehenen Schalter erhalten damit ein Dauersignal über die Steuerleitungen 17 bzw. 17'.

Die für den Kurzschlußfall vorgesehene Steuerschaltung 24 weist gleichfalls einen Komparator 241 mit leichter Hysterese auf, welcher den Betrag des mit dem Strommesser 28 zwischen den Lastpunkten gemessenen Ausgangsstromes mit einem über einem Widerstand 242 festgelegten Festwert, der dem maximal zulässigen Strom entspricht, vergleicht. Die Polaritäten sind so gewählt, daß bei Betrieb unterhalb der Stromgrenze am Ausgang des Komparators 241 die maximale Spannung ansteht.

Diese Spannung wird über die Leitung 19 jeweils auf den zweiten Eingang der beiden UND-Glieder 32, 34 geschaltet, welche in den Steuerleitungen 17 und 17' für die Schalter $T_1$-$T_4$ liegen. Damit werden im Kurzschlußfall die Schalter $T_1$-$T_4$ über die Steuerschaltung 16 angewählt und durch die Steuerschaltung 24 jeweils nach Erreichen des maximal zulässigen Stromes gesperrt bzw. nach Abklingen auf einen unteren Wert freigegeben.

Die Steuersignale für die Thyristoren 20 und 22 werden durch Inversion des Signals 19 in einem Inverter 34 erzeugt.

Die vorstehend beschriebene Schaltung stellt nur eine mögliche Ausführungsform für die Ansteuerung der Halbleiterschaltelemente gemäß der Erfindung dar.

Die Ansteuersignale können z.B. auch in bekannter Weise durch Modulation einer sinusförmigen Spannung von Nennfrequenz mit einer dreieckförmigen Spannung einer Trägerfrequenz, die einige KHz betragen sollte, erzeugt werden.

Die beschriebene Anordnung arbeitet wie folgt.

Wird durch den Spannungsmesser 26 eine Unterspannung über der Sekundärseite des Transformators festgestellt, die auf einen Kurzschluß in einem Verbraucher 8, 8' zurückzuführen ist, wird die normale Spannungsregelung durch Pulsweitenmodulation mittels der Steuerschaltung 16 abgelöst durch eine Strombegrenzungsregelung mittels der Steuerschaltung 24. Über die Steuerschaltung 24 bleiben die Halbleiterschaltelemente jeweils bis zum Erreichen ihrer Stromgrenze eingeschaltet. Ist die Stromgrenze erreicht, werden die Halbleiterschaltelemente gesperrt. Das Erreichen der Stromgrenze wird im Lastkreis über den Strommesser 28 ermittelt.

Mit dem Sperren der Halbleiterschaltelemente werden gleichzeitig durch die Steuerschaltung 24 über die Steuerleitung 30 die beiden antiparallelen Thyristoren 20 und 22 gezündet. Der von der magnetisch gespeicherten Energie im Kurzschlußkreis geschobene Strom kommutiert dann in den in Stromrichtung leitenden Thyristor. Der Stromfluß durch die Last bleibt also erhalten.

Abweichend vom normalen Betrieb mit der Steuerschaltung 16, bei dem der durch die in der Last gespeicherte Energie geschobene Strom über die Freilaufdioden kommutiert und in die Spannungsquelle zurück gelangt, wobei er infolge der Gegenspannung rasch abklingt, wird durch Einschalten des in Richtung des jeweiligen Stromflusses durchlässigen Thyristors, der die Funktion einer gesteuerten Freilaufdiode hat, ein langsames Abklingen des Stromes nach der Zeitkonstante L/R im Kurzschlußkreis erreicht. Diese Zeitkonstante ist groß, da die Widerstände im Lastkreis auslegungsgemäß zur Vermeidung unnötiger Betriebsverluste klein gehalten werden.

Bei Erreichen des vorbestimmten Minimalstromes, der, wie erwähnt, noch weit über Nennstrom liegt, werden die vorher gesperrten Halbleiterschalter durchgeschaltet, beispielsweise die Halbleiterschaltelemente T2 und T3, wenn vorher der Strom durch den Thyristor 22 geflossen ist. Auf diese Weise wird über die Thyristoren in Verbindung mit der Steuerschaltung 24 der Effektivwert des Laststromes im Kurzschlußfall gegenüber dem Nennstrom um ein Vielfaches erhöht bei erheblicher Entlastung der Halbleiterschaltelemente und der Freilaufdioden vom Kurzschlußstrom.

Der beschriebene Schaltvorgang wird solange wiederholt und damit der Kurzschlußstrom solange auf seinem hohen Wert gehalten, bis die Sicherung 10 im Sekundärkreis getrennt ist. Die Spannung über der Last steigt dann wieder an und zeigt an, daß der Kurzschluß abgeschaltet ist. Anschließend wird die normale pulsweitenmodulierte Steuerung der Halbleiterschaltelemente über die Steuerschaltung 16 wieder aufgenommen.

Die Thyristoren 20 und 22 werden nur im Kurzschlußfall belastet und können dementsprechend klein dimensioniert werden.

Die Kommutierung des im Kurzschlußkreis induktiv geschobenen Stromes über die Thyristoren kann, wie erwähnt, während einer Halbwelle von beispielsweise 10 ms mehrfach ablaufen. Es wird also während einer Halbwelle mehrfach der der Stromgrenze für die Halbleiterschaltelemente entsprechende Maximalstrom erreicht und gleichzeitig ein noch wesentlich über Nennstrom liegender Strom durch die Last aufrecht erhalten und damit sichergestellt, daß im Kurzschlußfall die Sicherung im allgemeinen schon während der ersten Halbwelle getrennt und der Kurzschluß abgeschaltet wird.

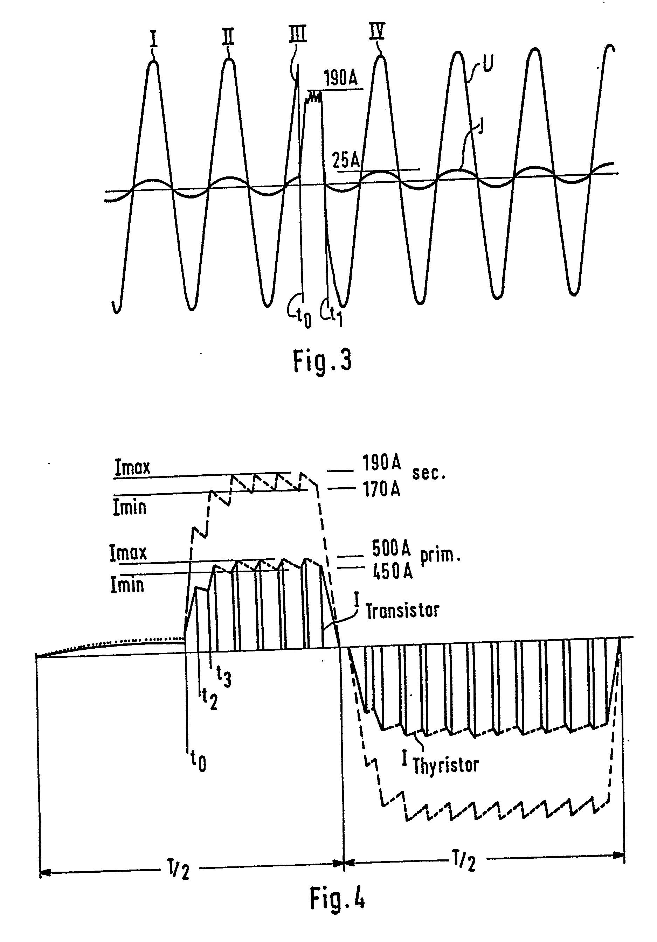

Die Wirkungsweise der beschriebenen Schaltungsanordnungen wird im folgenden unter Bezug auf die Oszillogramme in den Fig. 3 und 4 im einzelnen beschrieben. In Fig. 3 ist die vom Wechselrichter erzeugte Wechselspannung U aufgezeichnet und gleichzeitig der dazugehörige Nennstrom I im Normalbetrieb. Während der dritten positiven Halbwelle III ist zum Zeitpunkt $t_0$ ein Kurzschluß aufgetreten. Dieser führt zu einem Zusammenbruch der Spannung und damit zu einem Umschalten von der Steuerschaltung 16 auf die Steuerschaltung 24. Damit wird in der oben beschriebenen Weise der Effektivwert des Laststromes I um ein Vielfaches gegenüber dem Laststrom im Nennbetrieb erhöht. Der Laststrom wird hier beispielsweise sekundärseitig zwischen 170 und 190 A gehalten gegenüber einem Laststrom von 25 A im Normalbetrieb. Zum Zeitpunkt $t_1$, also kurz nach Ende der positiven Halbwelle III, ist die Sicherung getrennt und der Kurzschluß abgeschaltet. Die Steuerung der Halbleiterschaltelemente geht wieder auf die Steuerschaltung 16 über und die Spannung U nimmt während der negativen Halbwelle wieder ihren normalen Wert an.

Weitere Einzelheiten sind aus Fig. 4 ersichtlich, die im einzelnen den über die Halbleiterschaltelemente in den kurzgeschlossenen Lastkreis eingespeisten und in diesem umlaufenden Strom wiedergibt.

Zum Zeitpunkt $t_0$ einer positiven Halbwelle mit der Dauer T/2 ist es zum Spannungszusammenbruch durch Kurzschluß gekommen. Durch Umschalten der Steuerung der Halbleiterschaltelemente von der normalen Steuerschaltung 16 für Pulsweitenmodulation auf die Steuerschaltung 24 erfolgt der Stromfluß durch die Halbleiterschaltelemente jeweils bis zu deren Stromgrenze. Der Strom steigt dabei, wie erwähnt, primär weit über den Nennstrom $I_{Nenn}$ von hier 25 A an. Beim dritten Schalten der Halbleiterschaltelemente hat zum Zeitpunkt des Sperrens der jeweils leitenden Halbleiterschaltelemente, das ist zum Zeitpunkt $t_2$, der primärseitige Strom seinen entsprechenden Maximalwert $I_{max}$ erreicht. Nach Zünden der Thyristoren fällt der Strom im Kurzschlußkreis längs des gestrichelten Kurvenastes mit der Zeitkonstanten L/R langsam ab bis auf den Minimalstrom $I_{min}$. Dieser Stromabfall steht im Gegensatz min zum Normalbetrieb, bei dem der Strom aufgrund der Gegenspannung im Ladekreis steil abfällt. Zum Zeitpunkt $t_3$ ist $I_{min}$ erreicht, und es kommt zum erneuten Einschalten der Halbleiterschaltelemente und damit des Ladestromkreises. Der Kurzschlußstrom steigt dabei erneut auf $I_{max}$ an. Der Strom, der hier beispielsweise primärseitig zwischen $I_{max}$ = 500 A und $I_{min}$ = 450 A gehalten wird, hält sich sekundärseitig auf einem Wert zwischen $I_{max}$ = 190 A und $I_{min}$ = 170 A, wie aus Fig. 4 ersichtlich. Der Effektivwert des Kurzschlußstromes liegt damit um ein Vielfaches über dem sekundärseitigen Nennstrom. Durch diesen außerordentlich hohen Kurzschlußstrom kommt es kurzfristig, d.h. etwa innerhalb von 10 ms bei einer Frequenz von 50 Hz zu einem Trennen einer Schmelzsicherung oder eines Leistungsschalters.

Wenn am Ende der hier positiven Halbwelle, während der der Kurzschluß aufgetreten ist, der Kurzschluß noch nicht abgetrennt worden ist, wird durch Umschaltung der Steuersignale auf die während der folgenden negativen Halbwelle stromführenden Halbleiterbauelemente und dem zu diesem Strompfad gehörenden Thyristor in der beschriebenen Weise die Stromüberhöhung während dieser Halbwelle mit entgegengesetzter Polarität aufrechterhalten. Diese Stromüberhöhung kann gegebenenfalls für weitere Halbwellen aufrechterhalten werden.

Gelingt es nicht, in angemessener Zeit den Kurzschluß zu trennen, wird beispielsweise nach 4 bis 6 Perioden der Strom zurückgenommen, beispielsweise auf den 1,5 fachen Nennstrom, um die Bauelemente zu entlasten. Hierfür können in der Steuerschaltung 24 entsprechende Zeitglieder vorgesehen werden.

Im vorstehenden ist eine Ausführungsform eines Wechselrichters in einphasiger Brückenschaltung beschrieben. Analog ist eine Ausführung auch mit mehrphasigem, insbesondere dreiphasigem Ausgang möglich.

**Patentansprüche**

1. Statischer Wechselrichter in Brückenschaltung mit steuerbaren Halbleiterschaltelementen (T1-T4) und dazu antiparallelen Dioden (D1-D4) und mit einer Schaltung zur kurzzeitigen Stromüberhöhung über den Nennstrom im Falle eines Kurzschlusses auf der Lastseite, dadurch gekennzeichnet, daß über den Wechselrichterausgang (2, 4) antiparallel Thyristoren (20, 22) geschaltet sind und daß eine Steuerschaltung (24) vorgesehen ist, die bei einem Kurzschluß die normale Steuerung des Wechselrichters (16) ablöst und die Halbleiterschaltelemente (T1-T4) jeweils zwischen zwei Strömen ($I_{min}$-$I_{max}$) im Lastkreis schaltet, von denen der höhere Strom ($I_{max}$) der Stromgrenze für die Halbleiterschaltelemente entspricht und der niedrigere Strom ($I_{min}$) wesentlich über dem Nennstrom liegt, und die bei Erreichen der Stromgrenze die Halbleiterschaltelemente sperrt und mindestens den in Flußrichtung des Stromes durchlässigen Thyristor zündet.

2. Wechselrichter nach Anspruch 1, dadurch gekennzeichnet, daß die Steuerschaltung (24) in Abhängigkeit von der Verbraucherspannung aktivierbar ist.

3. Wechselrichter nach Anspruch 1, dadurch gekennzeichnet, daß Zeitglieder vorgesehen sind, mit denen nach angemessener Zeit die Stomgrenze auf einen als Dauerstrom thermisch zulässigen Wert reduziert wird.

4. Wechselrichter nach Anspruch 1, dadurch gekennzeichnet, daß als Halbleiterschaltelemente MOS-Fets vorgesehen sind.

5. Wechselrichter nach Anspruch 1, dadurch gekennzeichnet, daß er einphasig in Brückenschaltung ausgebildet ist.

6. Wechselrichter nach Anspruch 1, dadurch gekennzeichnet, daß der Wechselrichter mehrphasig mit einem dreiphasigen Ausgang ausgebildet ist.

7. Wechselrichter nach einem der vorhergehenden Ansprüche, dadurch gekennzeichnet, daß der Wechselrichterausgang auf einen Transformator geschaltet ist.

**Revendications**

1. Onduleur statique en circuit en pont équipé éléments de commutation à semiconducteurs commandés (T1-T4) et de diodes antiparallèles à ceux-ci (D1-D4) et d'un circuit en vue de l'accroissement temporaire du courant au-delà du courant nominal dans le cas d'un court-circuit côté charge, caractérisé en ce que sur la sortie de l'onduleur (2, 4) sont montés des thyristors antiparallèles (20, 22) et en ce qu'un circuit de commande (24) est prévu, qui, dans le cas d'un court-circuit, supprime la commande normale de l'onduleur (16) et commute les éléments de commutation à semiconducteurs (T1-T4) entre deux courants ($I_{min}$-$I_{max}$) dans le circuit de charge, dont le courant supérieur ($I_{max}$) correspond à la limite de coumax rant pour les éléments de commutation à semiconducteurs et le courant le plus faible ($I_{min}$) se trouve sensiblement au-dessus du courant nominal, et qui bloque les éléments de commutation à semiconducteurs lors de l'atteinte de la limite de courant et amorce au moins le transistor conducteur dans le sens de circulation du courant.

2. Onduleur selon la revendication 1, caractérisé en ce que le circuit de commande (24) peut être activé en fonction de la tension des appareils d'utilisation.

3. Onduleur selon la revendication 1, caractérisé en ce que des éléments de temporisation sont prévus, à l'aide desquels, après un temps mesuré, la limite de courant est réduite à une valeur admissible thermiquement en tant que courant permanent.

4. Onduleur selon la revendication 1, caractérisé en ce que des transistors à effet de champ MOS sont prévus en tant qu'éléments de commutation à semiconducteurs.

5. Onduleur selon la revendication 1, caractérisé en ce qu'il est réalisé en circuit en pont monophasé.

6. Onduleur selon la revendication 1, caractérisé en ce que l'onduleur est réalisé de façon polyphasée avec une sortie triphasée.

7. Onduleur selon l'une quelconque des revendications précédentes, caractérisé en ce que la sortie de l'onduleur est connectée sur un transformateur.

**Claims**

1. Static inverter in bridge circuit with controllable semiconductor switch elements (T1-T4) and diodes (D1-D4) anti-parallel thereto and with a circuit for the short-term raising of the current far above the rated current in the case of a short-circuit on the load side, charactersed in that thyristors (20, 22) are connected antiparallel across the inverter output (2, 4) and that a control circuit (24) is provided which upon a short-circuit relieves the normal control of the inverter (16) and connects the semi-conductor switch elements (T1-T4) respectively between two currents (Imin-Imax) in the load circuit, of which the higher current (Imax) corresponds to the current limit for the semi-conductor switch elements and the lower current (Imin) lies substantially above the rated current, and that said control circuit (24) on the attainment of the current limit blocks the semi-conductor switch elements and triggers at least the thyristor conductive in the flow direction of the current.

2. Inverter according to claim 1, characterised in that the control circuit (24) can be activated as a function of the load voltage.

3. Inverter according to claim 1, characterised in that timing elements are provided with which after an appropriate time the current limit is reduced to a thermally permissible value as continuous current.

4. Inverter according to claim 1, characterised in that MOSFETs are provided as semi-conductor switch elements.

5. Inverter according to claim 1, characterised in that it is designed single-phase in a bridge circuit.

6. Inverter according to claim 1, characterised in that the inverter is designed multi-phase with a three-phase output.

7. Inverter according to any one of the preceding claims, characterised in that the inverter output is connected to a transformer.

Fig.1

Fig.2

Fig. 3

Fig. 4